# EUROPEAN PATENT APPLICATION

(11) **EP 3 316 145 A1**
(43) Date of publication of application: **02.05.2018**
(21) Application number: 17198559.1
(22) Date of filing: 26.10.2017
(51) Int. Cl.: G06F 12/0817

(54) **MEMORY ACCESS METHOD AND MULTIPROCESSOR SYSTEM**

(30) Priority: 26.10.2016 CN 201610949371
(71) Applicant: HUAWEI TECHNOLOGIES CO., LTD., Guangdong 518129 (CN)
(72) Inventor: LAN, Kejia, Shenzhen, Guangdong 518129 (CN); CHENG, Yongbo, Shenzhen, Guangdong 518129 (CN); HE, Chenghong, Shenzhen, Guangdong 518129 (CN)
(74) Representative: Körber, Martin Hans

(57) **Abstract**

Embodiments of the present invention disclose a memory access method, to shorten a delay of an entire requesting process, and improve response efficiency. The method in the embodiments of the present invention includes: receiving, by a first processing module, a read request sent by a second processing module, where the read request is used for requesting to cache target data in a storage space corresponding to the first processing module and indicating a status expected by the second processing module for the target data; determining, according to a destination directory, one or more target storage spaces in which the target data is cached; sending a listening request to one or more target processing modules corresponding to the target storage space, so that the target processing module returns a listening response to the second processing module, where the listening response is used for responding to the expected status; returning a target packet to the second processing module, where the target packet includes the target data and a listening quantity; when a quantity of the listening response received by the second processing module matches the listening quantity, receiving an update packet sent by the second processing module; and updating the destination directory according to the update packet.

## Description

### TECHNICAL FIELD

The present invention relates to the computer field, and in particular, to a memory access method and a multiprocessor system.

### BACKGROUND

A memory is a storage space that can be directly addressed by a processor, and is configured to temporarily store operation data in the processor. A cache (Cache) is located between the processor and the memory, and is a memory whose read/write speed is greater than that of the memory. When the processor writes data to or reads data from the memory, the data is also saved in the cache. When the processor needs the data again, the processor reads the data from the cache instead of accessing the slow memory. If the required data is not in the cache, the processor reads the data from the memory. A cache line (Cache Line) is a minimum unit processed by the cache.

There is an entire set of protocol on the processor to ensure cache coherence. A relatively classical cache coherence protocol is the MESI protocol.

In the MESI protocol, each cache line has four states that are as follows:

| **State** | **Description** |
|---|---|
| M (Modified) | This line of data is valid, the data is modified and is inconsistent with data in a memory, and the data is only in this cache. |
| E (Exclusive) | This line of data is valid, the data is consistent with data in a memory, and the data is only in this cache. |
| S (Shared) | This line of data is valid, the data is consistent with data in a memory, and the data is in many caches. |
| I (Invalid) | This line of data is invalid. |

In a cache, data in cache lines in an M (Modified) state and an E (Exclusive) state is exclusive to the cache, and a difference is: The data in the M state is inconsistent (dirty) with that in a memory, and the data in the E state is consistent (clean) with that in the memory. Data in a cache line (Cache line) in an S state is shared with a cache area of another core, and only clean data can be shared with multiple cache areas. Data in a cache line in an I (Invalid) state is invalid in the cache.

Directory: A directory records a status of a cache line that is possessed by another cache area.

Listening is a method in which a low-layer memory queries a high-layer memory to determine whether the high-layer memory includes data with a given address, and a main objective is to request, by running the low-layer memory, the high-layer memory to update data, so as to maintain memory coherence. A listening operation may trigger write back or more normal write back and is invalid. The low-layer memory is a memory that is relatively far from a processor in a multi-level memory system, and the high-layer memory is a memory that is relatively close to the processor in the multi-level memory system.

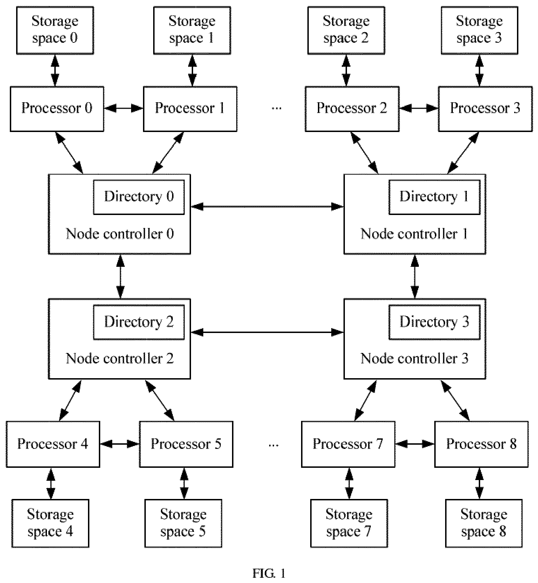

Referring to FIG. 1, in a cache coherent non-uniform memory access (CC-NUMA) system, each node unit includes one node controller (NC) chip and two processors (processor) that are connected to the NC chip, and multiple nodes are interconnected by using the NC chip to form a large system. Because an NC needs to be responsible for maintaining data coherence between nodes, each NC chip has a directory to maintain a status of a memory that is of this node and that is possessed by an external node and to initiate external listening.

A processor 4 needs to access a cache line in a memory of a processor 0. First, a request is routed to an NC 0 by using an NC 2, and the NC 0 initiates the request to the processor 0, and simultaneously views a directory and initiates listening to an NC 1 and an NC 3. The processor 0 returns a read response to the NC 0, and the read response waits for a listening result on the NC 0. The NC 1 and the NC 3 return a listening response to the NC 0, and the NC 0 returns the read response to the NC 2 after collecting the read response and the listening response, and simultaneously updates the directory. The NC 2 returns the read response to the processor 4, and the operation is completed.

In the foregoing prior art, after obtaining the read response, the NC 0 further needs to wait for the listening result, and returns the read response to the NC 2 only after collecting all listening responses. It takes some time to collect the listening response, and it also takes some time to return the read response. Consequently, the entire requesting process consumes much time, and response efficiency is low.

### SUMMARY

Embodiments of the present invention provide a memory access method and a processing module, to shorten a delay of an entire requesting process, and improve response efficiency.

In view of this, a first aspect of the embodiments of the present invention provides a memory access method, including:
receiving, by a first processing module, a read request sent by a second processing module, where the read request is used for requesting to cache target data in a storage space corresponding to the first processing module and indicating a status expected by the second processing module for the target data; searching, by the first processing module, a destination directory, to determine one or more target storage spaces that are in the destination directory and in which the target data is cached, where the target storage space is a storage space other than the storage space corresponding to the first processing module; after determining the target storage space, sending, by the first processing module, a listening request to a target processing module corresponding to each target storage space, so that each target processing module returns a listening response to the second processing module according to the listening request, and then returns a target packet to the second processing module, where the target packet includes the target data and a listening quantity, and the listening quantity is a quantity of listening requests sent by the first processing module; and when a quantity of listening responses received by the second processing module matches the listening quantity in the target packet, receiving, by the first processing module, an update packet sent by the second processing module, and updating the destination directory according to the update packet.

In this embodiment of the present invention, after receiving the read request sent by the second processing module for the target data, the first processing module determines, according to the destination directory, the target storage space in which the target data is cached, sends the listening request to the target processing module corresponding to the target storage space, and simultaneously returns the target packet to the second processing module. The target packet carries the target data and the quantity of listening requests sent by the first processing module. The second processing module can determine, according to the quantity carried in the target packet and the listening response returned by the target processing module, that the request is completed, and sends the update packet to the first processing module. The first processing module updates a status of the target data in the directory according to the update packet. It may be learned that, in this solution, the first processing module may directly return the target data to the second processing module without a need to wait for collection of all listening responses, and simultaneously instruct the target processing module to directly return the listening response to the second processing module, and the listening response is collected on the first processing module to confirm that a task is completed. In this way, a delay of the target data from the first processing module to the second processing module can be covered by a delay of collecting the listening response, so that serialization of two delays is avoided, a delay of an entire requesting process is shortened, and response efficiency is improved.

With reference to the first aspect of the embodiments of the present invention, in a first implementation of the first aspect of the present invention, the listening request includes a requester of the expected status and an instruction for returning the listening response to the requester, and the requester is the second processing module.

This embodiment of the present invention provides a manner in which the target processing module directly returns the listening response to the second processing module, so that implementability of the solution is improved.

With reference to the first aspect of the embodiments of the present invention or the first implementation of the first aspect, in a second implementation of the first aspect of the embodiments of the present invention, if the expected status is occupying the target data exclusively, that is, the second processing module expects that no processing module other than the second processing module can cache the target data, correspondingly, the listening request is used for requesting to change a cache status of the target data in the target storage space to invalid.

This embodiment of the present invention provides a manner for implementing the status expected by the second processing module for the target data, so that implementability of the solution is improved.

With reference to the first aspect of the embodiments of the present invention or the first implementation of the first aspect, in a third implementation of the first aspect of the embodiments of the present invention, if the expected status is sharing the target data, that is, the second processing module expects to share the target data with another processing module, that is, both the second processing module and the another processing module can cache the target data, correspondingly, the listening request is used for requesting to change a cache status of the target data in the target storage space to shared.

This embodiment of the present invention provides another manner for implementing the status expected by the second processing module for the target data, so that flexibility of the solution is improved.

A second aspect of the embodiments of the present invention provides another memory access method, including:
when a second processing module wants to access and cache target data, determining, according to address information of the target data, that the target data is located in a storage space corresponding to the second processing module, and sending, by the second processing module, a read request to a first processing module, where the read request is used for requesting to cache the target data and indicating a status expected by the second processing module for the target data; after sending the read request, receiving, by the second processing module, a target packet returned by the first processing module, and receiving, by the second processing module, a listening response that is returned by a target processing module according to a listening request, where the target packet includes the target data and a listening quantity, the listening quantity is a quantity of listening requests sent by the first processing module to the target processing module, the target processing module is a processing module corresponding to one or more target storage spaces in which the target data is cached and that are determined by the first processing module according to a destination directory, the target storage space is a storage space other than the storage space corresponding to the first processing module, and the listening response is generated by the target processing module to respond to the expected status; and when the second processing module determines that the received listening response returned by the target processing module matches the listening quantity included in the target packet, sending, by the second processing module, an update packet to the first processing module, so that the first processing module updates the destination directory.

In this embodiment of the present invention, after receiving the read request sent by the second processing module for the target data, the first processing module determines, according to the destination directory, the target storage space in which the target data is cached, sends the listening request to the target processing module corresponding to the target storage space, and simultaneously returns the target packet to the second processing module. The target packet carries the target data and the quantity of listening requests sent by the first processing module. The second processing module can determine, according to the quantity carried in the target packet and the listening response returned by the target processing module, that the request is completed, and sends the update packet to the first processing module. The first processing module updates a status of the target data in the directory according to the update packet. It may be learned that, in this solution, the first processing module may directly return the target data to the second processing module without a need to wait for collection of all listening responses, and simultaneously instruct the target processing module to directly return the listening response to the second processing module, and the listening response is collected on the first processing module to confirm that a task is completed. In this way, a delay of the target data from the second processing module to the first processing module can be covered by a delay of collecting the listening response, so that serialization of two delays is avoided, a delay of an entire requesting process is shortened, and response efficiency is improved.

With reference to the second aspect of the embodiments of the present invention, in a first implementation of the second aspect of the present invention, if the expected status is occupying the target data exclusively, that is, the second processing module expects that no processing module other than the second processing module can cache the target data, correspondingly, the listening response is used to indicate that a cache status of the target data in the target storage space has been changed to invalid.

This embodiment of the present invention provides a manner for implementing the status expected by the second processing module for the target data, so that implementability of the solution is improved.

With reference to the second aspect of the embodiments of the present invention, in a second implementation of the second aspect of the embodiments of the present invention, if the expected status is sharing the target data, that is, the second processing module expects to share the target data with another processing module, that is, both the second processing module and the another processing module can cache the target data, correspondingly, the listening response is used to indicate that a cache status of the target data in the target storage space has been changed to shared.

This embodiment of the present invention provides another manner for implementing the status expected by the second processing module for the target data, so that flexibility of the solution is improved.

A third aspect of the embodiments of the present invention provides another memory access method, including:
receiving, by a target processing module, a listening request sent by a first processing module, where the listening request is used to indicate a status expected by a second processing module for target data, and the target data is data in a storage space corresponding to the first processing module; changing, by the target processing module, a cache status of the target data in a target storage space according to the expected status indicated in the listening request, and generating a listening response, where the target storage space is a storage space corresponding to the target processing module; and after generating the listening response, returning, by the target processing module, the listening response to the second processing module.

In this embodiment of the present invention, after receiving the read request sent by the second processing module for the target data, the first processing module determines, according to a destination directory, the target storage space in which the target data is cached, sends the listening request to the target processing module corresponding to the target storage space, and simultaneously returns a target packet to the second processing module. The target packet carries the target data and a quantity of listening requests sent by the first processing module. The second processing module can determine, according to the quantity carried in the target packet and the listening response returned by the target processing module, that the request is completed, and sends an update packet to the first processing module. The first processing module updates a status of the target data in the directory according to the update packet. It may be learned that, in this solution, the first processing module may directly return the target data to the second processing module without a need to wait for collection of all listening responses, and simultaneously instruct the target processing module to directly return the listening response to the second processing module, and the listening response is collected on the first processing module to confirm that a task is completed. In this way, a delay of the target data from the second processing module to the first processing module can be covered by a delay of collecting the listening response, so that serialization of two delays is avoided, a delay of an entire requesting process is shortened, and response efficiency is improved.

With reference to the third aspect of the embodiments of the present invention, in a first implementation of the third aspect of the present invention, the listening request includes a requester of the expected status and an instruction for returning the listening response to the requester, the requester is the second processing module, and correspondingly, a process in which the target processing module returns the listening response to the second processing module is specifically as follows:
The target processing module returns the listening response to the second processing module according to the indication in the listening request.

This embodiment of the present invention provides a specific manner in which the target processing module directly returns the listening response to the second processing module, so that implementability of the solution is improved.

With reference to the third aspect of the embodiments of the present invention or the first implementation of the third aspect, in a second implementation of the third aspect of the embodiments of the present invention, if the expected status is occupying the target data exclusively, that is, the second processing module expects that no processing module other than the second processing module can cache the target data, correspondingly, the changing, by the target processing module, a cache status of the target data in a target storage space according to the expected status is specifically:
changing, by the target processing module, the cache status of the target data in the target storage space to invalid.

This embodiment of the present invention provides a manner for implementing the status expected by the second processing module for the target data, so that implementability of the solution is improved.

With reference to the third aspect of the embodiments of the present invention or the first implementation of the third aspect, in a third implementation of the third aspect of the embodiments of the present invention, if the expected status is sharing the target data, that is, the second processing module expects to share the target data with another processing module, that is, both the second processing module and the another processing module can cache the target data, correspondingly, the changing, by the target processing module, a cache status of the target data in a target storage space according to the expected status is specifically:
changing, by the target processing module, the cache status of the target data in the target storage space to shared.

This embodiment of the present invention provides another manner for implementing the status expected by the second processing module for the target data, so that flexibility of the solution is improved.

A fourth aspect of the embodiments of the present invention provides a multiprocessor system, and the system includes: a first processing module, a second processing module, and a target processing module;
the first processing module is configured to: receive a read request sent by the second processing module, where the read request is used for requesting to cache target data in a storage space corresponding to the first processing module and indicating a status expected by the second processing module for the target data; determine, according to a destination directory, one or more target storage spaces in which the target data is cached, where the target storage space is a storage space other than the storage space corresponding to the first processing module; send a listening request to one or more target processing modules corresponding to the target storage space; return a target packet to the second processing module, where the target packet includes the target data and a listening quantity, and the listening quantity is a quantity of listening requests sent by the first processing module; and when a listening response received by the second processing module matches the listening quantity, receive an update packet sent by the second processing module, and update the destination directory according to the update packet;
the second processing module is configured to: send the read request to the first processing module; receive the target packet returned by the first processing module; receive the listening response that is returned by the target processing module according to the listening request, where the listening response is used for responding to the expected status; and when the second processing module determines that a quantity of listening responses matches the listening quantity, send the update packet to the first processing module; and
the target processing module is configured to: receive the listening request sent by the first processing module, where the listening request is used to indicate the status expected by the second processing module for the target data; change a cache status of the target data in the target storage space according to the expected status, and generate the listening response; and return the listening response to the second processing module.

With reference to the fourth aspect of the embodiments of the present invention, in a first implementation of the fourth aspect of the embodiments of the present invention, the listening request includes a requester of the expected status and an instruction for returning the listening response to the requester, the requester is the second processing module, and correspondingly, the target processing module is further configured to return the listening response to the second processing module according to the instruction.

With reference to the fourth aspect of the embodiments of the present invention or the first implementation of the fourth aspect, in a second implementation of the fourth aspect of the embodiments of the present invention, if the expected status is occupying the target data exclusively, that is, the second processing module expects that no processing module other than the second processing module can cache the target data, correspondingly, the target processing module is further configured to change the cache status of the target data in the target storage space to invalid.

With reference to the fourth aspect of the embodiments of the present invention or the first implementation of the fourth aspect, in a third implementation of the fourth aspect of the embodiments of the present invention, if the expected status is sharing the target data, that is, the second processing module expects to share the target data with another processing module, that is, both the second processing module and the another processing module can cache the target data, correspondingly, the target processing module is further configured to change the cache status of the target data in the target storage space to shared. With reference to any one of the fourth aspect of the embodiments of the present invention, or the first to the third implementations of the fourth aspect, in a fourth implementation of the fourth aspect of the embodiments of the present invention, the first processing module, the second processing module, and the target processing module each include at least one processor.

With reference to any one of the fourth aspect of the embodiments of the present invention, or the first to the fourth implementations of the fourth aspect, in a fifth implementation of the fourth aspect of the embodiments of the present invention, the first processing module, the second processing module, and the target processing module each include at least one node controller.

It may be learned from the foregoing technical solutions that the embodiments of the present invention have the following advantages:
In the embodiments of the present invention, after receiving the read request sent by the second processing module for the target data, the first processing module determines, according to the destination directory, the target storage space in which the target data is cached, sends the listening request to the target processing module corresponding to the target storage space, and simultaneously returns the target packet to the second processing module. The target packet carries the target data and the quantity of listening requests sent by the first processing module. The second processing module can determine, according to the quantity carried in the target packet and the listening response returned by the target processing module, that the request is completed, and sends the update packet to the first processing module. The first processing module updates the status of the target data in the directory according to the update packet. It may be learned that, in this solution, the first processing module may directly return the target data to the second processing module without a need to wait for collection of all listening responses, and simultaneously instruct the target processing module to directly return the listening response to the second processing module, and the listening response is collected on the first processing module to confirm that a task is completed. In this way, a delay of the target data from the second processing module to the first processing module can be covered by a delay of collecting the listening response, so that serialization of two delays is avoided, a delay of an entire requesting process is shortened, and response efficiency is improved.

### BRIEF DESCRIPTION OF DRAWINGS

FIG. 1 is a schematic diagram of an embodiment of a CC-NUMA system;
FIG. 2 is a flowchart of an embodiment of a memory access method according to an embodiment of the present invention;
FIG. 3 is a flowchart of another embodiment of a memory access method according to an embodiment of the present invention;
FIG. 4 is a flowchart of another embodiment of a memory access method according to an embodiment of the present invention;

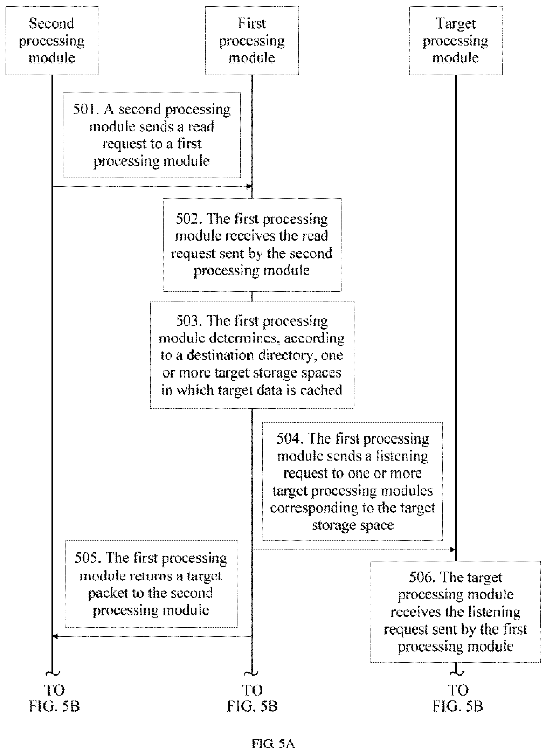

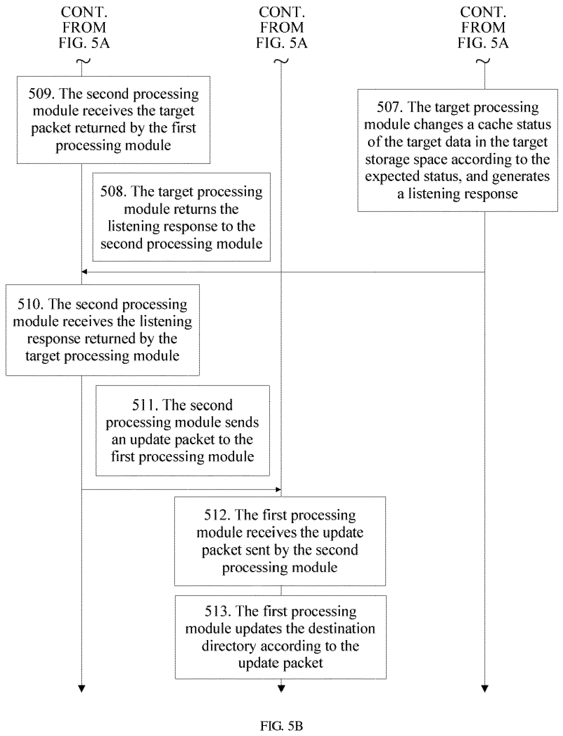

FIG 5A and FIG. 5B are a flowchart of another embodiment of a memory access method according to an embodiment of the present invention;
FIG. 6 is a schematic diagram of another embodiment of a CC-NUMA system; and
FIG. 7 is a schematic diagram of an embodiment of a multiprocessor system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data used in such a way are interchangeable in proper circumstances, so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, product, or device.

Embodiments of the present invention provide a memory access method and a processing module, to shorten a delay of an entire requesting process, and improve response efficiency.

It should be noted that in the embodiments of the present invention, a first processing module, a second processing module, and a target processing module each include at least one processor. Optionally, the first processing module, the second processing module, and the target processing module each may further include at least one node controller. The first processing module, the second processing module, and the target processing module may further include another component, and this is not specifically limited in the embodiments of the present invention.

It should further be noted that in the embodiments of the present invention, the target processing module cannot be the first processing module, but may be the second processing module, or may be another processing module. This is not specifically limited in the embodiments of the present invention.

For ease of understanding, referring to FIG. 1, FIG. 1 is an example in which each processing module includes two processors and one node controller, and the processing modules are interconnected by using the node controllers to form a CC-NUMA system. The memory access method in the embodiments of the present invention may be based on this system architecture, and may certainly be based on another system architecture. This is not specifically limited herein.

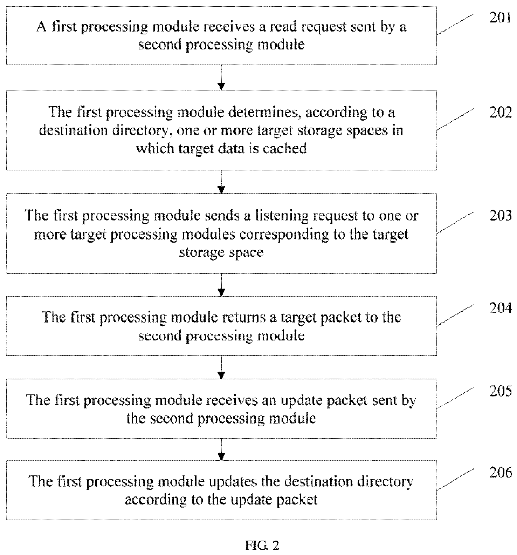

The memory access method in the embodiments of the present invention is described below from a perspective of a first processing module. Referring to FIG. 2, an embodiment of the memory access method according to the embodiments of the present invention includes the following steps.

201. A first processing module receives a read request sent by a second processing module.

When a second processor in the second processing module needs to read and cache target data, the second processor queries, in a system, address information corresponding to the target data, and determines, according to the address information, that the target data is located in a storage space of a first processor in the first processing module, and the second processing module sends the read request to the first processing module. The read request is used for requesting to cache the target data in the storage space corresponding to the first processor and indicating a status expected by the second processor for the target data. The first processing module receives the read request sent by the second processing module.

It should be noted that the operation of receiving the read request may be performed by the first processor in the first processing module, or may be performed by a node controller that is in the first processing module and that controls the first processor.

It should further be noted that the status expected by the second processor for the target data is an occupancy status expected by the second processor for the target data, and may be occupying the target data exclusively, that is, only the second processor can cache the target data and another processor cannot cache the target data, or may be sharing the target data with another processor, that is, not only the second processor can cache the target data, but also the another processor can cache the target data. The expected status may be another state, and this is not specifically limited herein.

202. The first processing module determines, according to a destination directory, one or more target storage spaces in which the target data is cached.

After receiving the read request, the first processing module determines, according to the destination directory, the one or more target storage spaces in which the target data is cached. The target storage space is a storage space other than the storage space corresponding to the first processing module. It should be noted that the destination directory is used for maintaining a status of data that is in the storage space corresponding to the first processing module and that is possessed by a storage space of another processing module.

It should further be noted that the operation of determining the target storage space may be performed by the first processor in the first processing module, or may be performed by the node controller that is in the first processing module and that controls the first processor.

203. The first processing module sends a listening request to one or more target processing modules corresponding to the target storage space.

After determining the target storage space, the first processing module sends the listening request to the one or more target processing modules corresponding to the target storage space, so that the one or more target processing modules return a listening response to the second processing module according to the listening request. The listening request is used to indicate a status expected by a requester for the target data to the target processing module, and the listening response is used for responding to the expected status.

It should be noted that the operation of sending the listening request may be performed by the first processor in the first processing module, or may be performed by the node controller that is configured to control the first processor. The first processing module may send the listening request to a target processor that is corresponding to the target storage space and that is in the target processing module, or may forward the listening request to the target processor by using a node controller that controls the target processor.

204. The first processing module returns a target packet to the second processing module.

After sending the listening request, the first processing module returns the target packet to the second processing module. The target packet includes the target data and a listening quantity, and the listening quantity is a quantity of listening requests sent by the first processing module.

It should be noted that the target data is obtained by the first processor in the first processing module from the storage space, and after obtaining the target data, the first processor may directly return the target data to the first processing module, or the target data may be returned to the second processing module by using the node controller that is in the first processing module and that controls the first processor.

205. The first processing module receives an update packet sent by the second processing module.

After the first processing module sends the listening request to the one or more target processing modules, the one or more target processing modules initiate listening to the target storage space according to the listening request, perform a corresponding operation to respond to the status expected by the requester for the target data, and return the listening response to the second processing module after performing the operation. The second processing module successively receives the listening response from the one or more target processing modules, and simultaneously receives the target packet returned by the first processing module. The second processing module determines, according to the listening quantity in the target packet, whether all listening responses are collected, and when a quantity of received listening responses matches the listening quantity, determines that all the listening responses are collected, and sends the update packet to the first processing module. The first processing module receives the update packet.

It should be noted that the operation of receiving the update packet may be performed by the first processor in the first processing module, or may be performed by the node controller that is in the first processing module and that controls the first processor.

206. The first processing module updates the destination directory according to the update packet.

After receiving the update packet, the first processing module updates the destination directory according to the update packet, that is, changes a status of the target data in the destination directory into the status expected by the second processing module for the target data.

It should be noted that the operation of updating the destination directory may be performed by the first processor in the first processing module, or may be performed by the node controller that is in the first processing module and that controls the first processor.

In this embodiment of the present invention, after receiving the read request sent by the second processing module for the target data, the first processing module determines, according to the destination directory, the target storage space in which the target data is cached, sends the listening request to the target processing module corresponding to the target storage space, and simultaneously returns the target packet to the second processing module. The target packet carries the target data and the quantity of listening requests sent by the first processing module. The second processing module can determine, according to the quantity carried in the target packet and the listening response returned by the target processing module, that the request is completed, and sends the update packet to the first processing module. The first processing module updates the status of the target data in the directory according to the update packet. It may be learned that, in this solution, the first processing module may directly return the target data to the second processing module without a need to wait for collection of all listening responses, and simultaneously instruct the target processing module to directly return the listening response to the second processing module, and the listening response is collected on the first processing module to confirm that a task is completed. In this way, a delay of the target data from the second processing module to the first processing module can be covered by a delay of collecting the listening response, so that serialization of two delays is avoided, a delay of an entire requesting process is shortened, and response efficiency is improved.

Based on the embodiment corresponding to FIG. 2, in this embodiment of the present invention, the listening request includes the requester of the expected status, that is, the second processor in the second processing module, and may further include an instruction for returning the listening response to the requester, that is, instructing the target processing module to return the listening response to the second processor in the second processing module.

This embodiment of the present invention provides a specific implementation in which the first processing module sends the listening request to enable the target processing module to return the listening response to the second processing module, so that implementability of the solution is improved.

Based on the embodiment corresponding to FIG. 2, in this embodiment of the present invention, the expected status may be sharing the target data, that is, in addition to the second processor in the second processing module, another processor can also cache the target data. Correspondingly, the listening request sent by the first processing module to the target processing module is further used for requesting to change a cache status of the target data in the target storage space to shared.

Alternatively, the expected status may be occupying the target data exclusively, that is, a processor other than the second processor in the second processing module cannot cache the target data. Correspondingly, the listening request sent by the first processing module to the target processing module is further used for requesting to change a cache status of the target data in the target storage space to invalid. The expected status may be another state, and this is not specifically limited herein.

In this embodiment of the present invention, the first processing module may respond, in multiple manners, to the status expected by the second processing module for the target data, so that flexibility of the solution is improved.

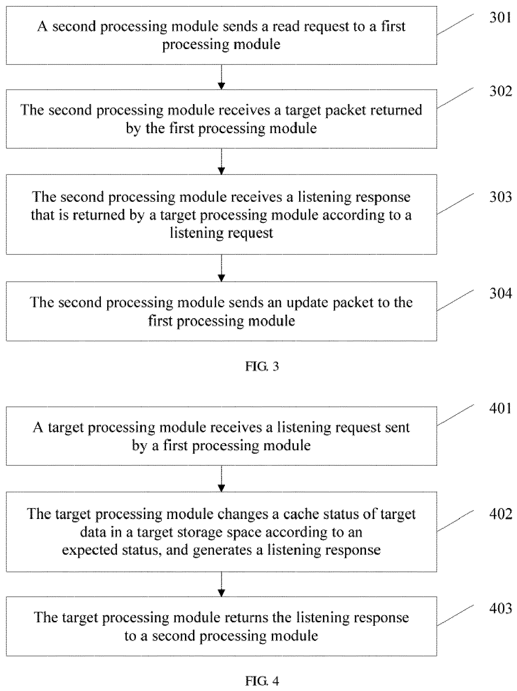

The memory access method in the embodiments of the present invention is described below from a perspective of a second processing module. Referring to FIG. 3, another embodiment of the memory access method according to the embodiments of the present invention includes the following steps.

301. A second processing module sends a read request to a first processing module.

When a second processor in the second processing module needs to read and cache target data, the second processor queries, in a system, address information corresponding to the target data, and determines, according to the address information, that the target data is located in a storage space corresponding to a first processor in the first processing module, and the second processing module sends the read request to the first processing module. The read request is used for requesting to cache the target data in the storage space corresponding to the first processor and indicating a status expected by the second processor for the target data.

It should be noted that the operation of sending the read request may be performed by the second processor in the second processing module, or may be performed by a node controller that is in the second processing module and that controls the second processor.

It should further be noted that the status expected by the second processor for the target data is an occupancy status expected by the second processor for the target data, and may be occupying the target data exclusively, that is, only the second processor can cache the target data and another processor cannot cache the target data, or may be sharing the target data with another processor, that is, not only the second processor can cache the target data, but also the another processor can cache the target data. The expected status may be another state, and this is not specifically limited herein.

302. The second processing module receives a target packet returned by the first processing module.

After receiving the read request, the first processing module determines, according to a destination directory, one or more target storage spaces in which the target data is cached, sends a listening request to one or more target processing modules corresponding to the target storage space, and simultaneously returns the target packet to the second processing module. The target packet includes the target data and a listening quantity, that is, a quantity of listening requests sent by the second processing module. The second processing module receives the target packet returned by the first processing module, and obtains the target data and the listening quantity.

It should be noted that the operation of receiving the target packet in this embodiment of the present invention may be performed by the second processor in the second processing module, or may be performed by the node controller that is in the second processing module and that controls the second processor. If the operation of receiving the target packet is performed by the node controller, after obtaining the target data, the node controller further needs to return the target data to the second processor, so that the second processor completes cache of the target data.

303. The second processing module receives a listening response that is returned by the target processing module according to the listening request.

The first processing module sends the listening request to the one or more target processing modules, and the listening request indicates a status expected by a requester for the target data. The one or more target processing modules receive the listening request, initiate listening to a corresponding target storage space according to the listening request, perform a corresponding operation to respond to the status expected by the requester for the target data, and return the listening response to the second processing module after performing the operation. The second processing module receives the listening response returned by the one or more target processing modules.

It should be noted that the operation of receiving the listening response in this embodiment of the present invention may be performed by the second processor in the second processing module, or may be performed by the node controller that is in the second processing module and that controls the second processor.

304. The second processing module sends an update packet to the first processing module.

After receiving the target packet and the listening response, the second processing module determines whether the listening quantity in the target packet matches a quantity of received listening responses, and when determining that the listening quantity matches the quantity of received listening responses, that is, determining that all target processors have responded to the expected status, the second processing module sends the update packet to the first processing module, so that the first processing module updates the destination directory according to the update packet, that is, changes a status of the target data in the destination directory into the status expected by the second processing module for the target data.

It should be noted that the operation of sending the update packet may be performed by the second processor in the second processing module, or may be performed by the node controller that is in the second processing module and that controls the second processor.

In this embodiment of the present invention, after receiving the read request sent by the second processing module for the target data, the first processing module determines, according to the destination directory, the target storage space in which the target data is cached, sends the listening request to the target processing module corresponding to the target storage space, and simultaneously returns the target packet to the second processing module. The target packet carries the target data and the quantity of listening requests sent by the first processing module. The second processing module can determine, according to the quantity carried in the target packet and the listening response returned by the target processing module, that the request is completed, and sends the update packet to the first processing module. The first processing module updates the status of the target data in the directory according to the update packet. It may be learned that, in this solution, the first processing module may directly return the target data to the second processing module without a need to wait for collection of all listening responses, and simultaneously instruct the target processing module to directly return the listening response to the second processing module, and the listening response is collected on the first processing module to confirm that a task is completed. In this way, a delay of the target data from the second processing module to the first processing module can be covered by a delay of collecting the listening response, so that serialization of two delays is avoided, a delay of an entire requesting process is shortened, and response efficiency is improved.

Based on the embodiment corresponding to FIG. 3, in this embodiment of the present invention, the status expected by the second processor for the target data may be sharing the target data, that is, in addition to the second processor in the second processing module, another processor can also cache the target data. Correspondingly, the listening response that is returned by the target processing module and that is received by the second processing module is used to indicate that a cache status of the target data in the target storage space has been changed to shared. Alternatively, the status expected by the second processor for the target data may be occupying the target data exclusively, that is, a processor other than the second processor cannot cache the target data. Correspondingly, the listening response that is returned by the target processing module and that is received by the second processing module is used to indicate that a cache status of the target data in the target storage space has been changed to invalid. The status expected by the second processor for the target data may be another state, and this is not specifically limited herein.

This embodiment of the present invention provides multiple statuses expected by the second processing module for the target data and corresponding implementations, so that flexibility of the solution is improved.

The memory access method in the embodiments of the present invention is described below from a perspective of a target processing module. Referring to FIG. 4, another embodiment of the memory access method according to the embodiments of the present invention includes the following steps.

401. A target processing module receives a listening request sent by a first processing module.

The first processing module receives a read request sent by a second processing module, and the read request is used for requesting to cache target data in a storage space corresponding to a first processor in the first processing module and indicating a status expected by a second processor in the second processing module for the target data. The first processing module receives the read request, determines, according to a destination directory, one or more target storage spaces in which the target data is cached, and sends the listening request to one or more target processing modules corresponding to the target storage space. The listening request is used to indicate a status expected by a requester for the target data, that is, the status expected by the second processing module for the target data. The target processing module receives the listening request sent by the first processing module.

It should be noted that the operation of receiving the listening request in this embodiment of the present invention may be performed by a target processor that is corresponding to the target storage space and that is in the target processing module, or may be performed by a node controller that is in the target processing module and that controls the target processor.

It should further be noted that the status expected by the second processor for the target data is an occupancy status expected by the second processor for the target data, and may be occupying the target data exclusively, that is, only the second processor can cache the target data and another processor cannot cache the target data, or may be sharing the target data with another processor, that is, not only the second processor can cache the target data, but also the another processor can cache the target data. The expected status may be another state, and this is not specifically limited herein.

402. The target processing module changes a cache status of the target data in the target storage space according to the expected status, and generates a listening response.

After the target processing module receives the listening request, the target processor in the target processing module changes the cache status of the target data in the target storage space according to the status expected by the requester for the target data in the listening request, and generates the listening response.

403. The target processing module returns the listening response to the second processing module.

After responding to the expected status and generating the listening response, the target processing module returns the listening response to the second processing module, so that the second processing module determines, according to the listening response, whether the target data is in the expected status. When determining that listening responses returned by all target processing modules are collected, the second processing module determines that the target data is in the expected status. The second processing module sends an update packet to the first processing module. The first processing module updates the destination directory according to the update packet, and changes the status of the target data into the expected status.

It should be noted that the operation of returning the listening response in this embodiment of the present invention may be performed by the target processor in the target processing module, or may be performed by the node controller that is in the target processing module and that controls the target processor.

In this embodiment of the present invention, after receiving the read request sent by the second processing module for the target data, the first processing module determines, according to the destination directory, the target storage space in which the target data is cached, sends the listening request to the target processing module corresponding to the target storage space, and simultaneously returns a target packet to the second processing module. The target packet carries the target data and a quantity of listening requests sent by the first processing module. The second processing module can determine, according to the quantity carried in the target packet and the listening response returned by the target processing module, that the request is completed, and sends the update packet to the first processing module. The first processing module updates a status of the target data in the directory according to the update packet. It may be learned that, in this solution, the first processing module may directly return the target data to the second processing module without a need to wait for collection of all listening responses, and simultaneously instruct the target processing module to directly return the listening response to the second processing module, and the listening response is collected on the first processing module to confirm that a task is completed. In this way, a delay of the target data from the second processing module to the first processing module can be covered by a delay of collecting the listening response, so that serialization of two delays is avoided, a delay of an entire requesting process is shortened, and response efficiency is improved.

Based on the embodiment corresponding to FIG. 4, in this embodiment of the present invention, the listening request sent by the first processing module includes the requester of the expected status and an instruction for returning the listening response to the requester, that is, informing the target processing module that the requester of the expected status is the second processor in the second processing module, and instructing the target processing module to return the listening response to the second processor. Therefore, after receiving the listening request sent by the first processing module, the target processing module may specifically return the listening response to the second processing module according to the instruction in the listening request.

This embodiment of the present invention provides a manner in which the target processing module returns the listening response to the second processing module, so that implementability of the solution is improved.

Based on the embodiment corresponding to FIG. 4, in this embodiment of the present invention, the status expected by the second processing module for the target data may be sharing the target data, that is, in addition to the second processor in the second processing module, another processor can also cache the target data. Correspondingly, the target processing module may change the cache status of the target data in the target storage space according to the expected status in the following manner: The target processing module changes the cache status of the target data in the target storage space to shared.

Alternatively, the status expected by the second processing module for the target data may be occupying the target data exclusively, that is, a processor other than the second processor cannot cache the target data. Correspondingly, the target processing module may change the cache status of the target data in the target storage space according to the expected status in the following manner: The target processing module changes the cache status of the target data in the target storage space to invalid.

The status expected by the second processing module for the target data may be another state, and correspondingly, the target processing module may further change the cache status of the target data in another manner. This is not specifically limited herein.

In this embodiment of the present invention, the target processing module may change the cache status of the target data in multiple manners, so that flexibility of the solution is improved.

For ease of understanding, the memory access method in the embodiments of the present invention is described below in a scenario in which a first processing module, a second processing module, and a target processing module interact with each other. Referring to FIG. 4, another embodiment of the memory access method according to the embodiments of the present invention includes the following steps.

501. A second processing module sends a read request to a first processing module.

When a second processor in the second processing module needs to read and cache target data, the second processor queries, in a system, address information corresponding to the target data, and determines, according to the address information, that the target data is located in a storage space corresponding to a first processor in the first processing module, and the second processing module sends the read request to the first processing module. The read request is used for requesting to cache the target data in the storage space corresponding to the first processor and indicating a status expected by the second processor for the target data.

It should be noted that the status expected by the second processor for the target data is an occupancy status expected by the second processor for the target data, and may be occupying the target data exclusively, that is, only the second processor can cache the target data and another processor cannot cache the target data, or may be sharing the target data with another processor, that is, not only the second processor can cache the target data, but also the another processor can cache the target data. The expected status may be another state, and this is not specifically limited herein. It should further be noted that the operation of sending the read request may be performed by the second processor in the second processing module, or may be performed by a node controller that is in the second processing module and that controls the second processor.

502. The first processing module receives the read request sent by the second processing module.

After the second processing module sends the read request to the first processing module, the first processing module receives the read request. It should be noted that the operation of receiving the read request may be performed by the first processor in the first processing module, or may be performed by a node controller that is in the first processing module and that controls the first processor.

503. The first processing module determines, according to a destination directory, one or more target storage spaces in which the target data is cached.

After receiving the read request, the first processing module determines, according to the destination directory, the one or more target storage spaces in which the target data is cached. The target storage space is a storage space other than the storage space corresponding to the first processing module. It should be noted that the destination directory is used for maintaining a status of data that is in the storage space corresponding to the first processing module and that is possessed by a storage space of another processing module.

It should further be noted that the operation of determining the target storage space may be performed by the first processor in the first processing module, or may be performed by the node controller that controls the first processor.

504. The first processing module sends a listening request to one or more target processing modules corresponding to the target storage space.

After determining the target storage space, the first processing module sends the listening request to the one or more target processing modules corresponding to the target storage space. The listening request is used to indicate a status expected by a requester for the target data to the target processing module, the listening request includes the requester of the expected status, and the listening request may further include an instruction for returning a listening response to the requester or other information. This is not specifically limited herein.

It should be noted that the operation of sending the listening request may be performed by the first processor in the first processing module, or may be performed by the node controller that is in the first processing module and that controls the first processor. The first processing module may send the listening request to a target processor that is corresponding to the target storage space and that is in the target processing module, or may forward the listening request to the target processor by using a node controller that controls the target processor.

505. The first processing module returns a target packet to the second processing module.

After the first processing module receives the read request, the request carries the address information of the target data, and the first processing module finds the target data in the storage space according to the address information, simultaneously collects statistics about a quantity of sent listening requests, adds the quantity of listening requests and the target data to the target packet, and returns the target packet to the second processing module.

It should be noted that the operation of returning the target packet in this embodiment of the present invention may be performed by the first processor in the first processing module, or may be performed by the node controller that is in the first processing module and that controls the first processor.

506. The target processing module receives the listening request sent by the first processing module.

After the first processing module sends the listening request to the one or more target processing modules, each target processing module receives the listening request. The status expected by the requester for the target data is determined according to the listening request, and the requester of the expected status is the second processing module.

It should be noted that the operation of receiving the listening request may be performed by the target processor that is corresponding to the target storage space and that is in the target processing module, or may be performed by the node controller that is in the target processing module and that controls the target processor.

507. The target processing module changes a cache status of the target data in the target storage space according to the expected status, and generates a listening response.

After receiving the listening request, each target processing module changes the cache status of the target data in the target storage space according to the expected status in the listening request, and generates the listening response. Specifically, when the expected status is sharing the target data, the target processor changes the cache status of the target data in the target storage space to shared, and in this case, the listening response is used to indicate that the cache status of the target data is a shared state. When the expected status is occupying the target data exclusively, the target processor changes the cache status of the target data in the target storage space to invalid, and in this case, the listening response is used to indicate that the cache status of the target data is an invalid state. The target processor may change the cache status in another manner, and this is not specifically limited herein.

508. The target processing module returns the listening response to the second processing module.

After generating the listening response, the target processing module returns the listening response to the second processing module. Specifically, the target processing module may return the listening response to the second processing module according to the instruction in the listening request, or may return the listening response to the requester of the expected status, that is, the second processing module according to a predetermined protocol. This is not specifically limited herein.

It should be noted that the operation of returning the listening response may be performed by the target processor in the target processing module, or may be performed by the node controller that is in the target processing module and that controls the target processor.

509. The second processing module receives the target packet returned by the first processing module.

After the first processing module sends the target packet to the second processing module, the second processing module receives the target packet, and obtains the target data and the listening quantity from the target packet.

It should be noted that the operation of receiving the target packet may be performed by the second processor in the second processing module, or may be performed by the node controller that is in the second processing module and that controls the second processor. If the operation of receiving the target packet is performed by the node controller, after obtaining the target data, the node controller further needs to return the target data to the second processor, so that the second processor completes cache of the target data.

510. The second processing module receives the listening response returned by the target processing module.

The second processing module successively receives listening responses returned by target processing modules while receiving the target packet. It should be noted that the operation of receiving the listening response may be performed by the second processor in the second processing module, or may be performed by the node controller that is in the second processing module and that controls the second processor.

511. The second processing module sends an update packet to the first processing module.

The second processing module determines whether the listening quantity in the target packet matches a quantity of received listening responses, and when the second processing module determines that the listening quantity matches the quantity of received listening responses, that is, all the target processing modules have responded to the expected status, the second processing module sends the update packet to the first processing module.

It should be noted that the operation of sending the update packet may be performed by the first processor in the first processing module, or may be performed by the node controller that is in the first processing module and that controls the first processor.

512. The first processing module receives the update packet.

The first processing module receives the update packet sent by the second processing module. It should be noted that the operation of receiving the update packet may be performed by the first processor in the first processing module, or may be performed by the node controller that is in the first processing module and that controls the first processor.

513. The first processing module updates the destination directory according to the update packet.

After receiving the update packet, the first processing module updates the destination directory according to the update packet, that is, changes a status of the target data in the destination directory into the status expected by the second processing module for the target data. Specifically, the expected status may be that only the second processor caches the target data, or may be that both the second processor and the target processor cache the target data, or may be another state. This is not specifically limited herein.

It should be noted that the operation of updating the destination directory may be performed by the first processor in the first processing module, or may be performed by the node controller that is in the first processing module and that controls the first processor.

It should further be noted that in this embodiment of the present invention, a process of step 505 in which the first processing module returns the target packet is after step 504 in which the first processing module sends the listening request, but is unnecessarily before step 506 and step 507 in which the target processing module receives the listening request and generates the listening response. A process of step 509 in which the second processing module receives the target packet is after step 505, but is unnecessarily after step 506 to step 508.

In this embodiment of the present invention, after receiving the read request sent by the second processing module for the target data, the first processing module determines, according to the destination directory, the target storage space in which the target data is cached, sends the listening request to the target processing module corresponding to the target storage space, and simultaneously returns the target packet to the second processing module. The target packet carries the target data and the quantity of listening requests sent by the first processing module. The second processing module can determine, according to the quantity carried in the target packet and the listening response returned by the target processing module, that the request is completed, and sends the update packet to the first processing module. The first processing module updates the status of the target data in the directory according to the update packet. It may be learned that, in this solution, the first processing module may directly return the target data to the second processing module without a need to wait for collection of all listening responses, and simultaneously instruct the target processing module to directly return the listening response to the second processing module, and the listening response is collected on the first processing module to confirm that a task is completed. In this way, a delay of the target data from the second processing module to the first processing module can be covered by a delay of collecting the listening response, so that serialization of two delays is avoided, a delay of an entire requesting process is shortened, and response efficiency is improved.

In addition, this embodiment of the present invention provides multiple implementations of different types of expected statuses, and multiple manners in which the target processing module directly returns the listening response to the second processing module, so that flexibility of the solution is improved.

For ease of understanding, the memory access method in the embodiments of the present invention is described in detail below in an actual application scenario.

A first processing module includes a node controller NC 1, a processor 1, a storage space memory 1 corresponding to the processor processor 1, and a directory dir 1, and the dir 1 is used for maintaining a status of the memory 1 that is possessed by another processing module.

A second processing module includes a node controller NC 2, a processor processor 2, a storage space memory 2 corresponding to the processor processor 2, and a directory dir 2, and the dir 2 is used for maintaining a status of the memory 2 that is possessed by another processing module.

A third processing module (a target processing module) includes a node controller NC 3, a processor processor 3, a storage space memory 3 corresponding to the processor processor 3, and a directory dir 3, and the dir 3 is used for maintaining a status of the memory 3 that is possessed by another processing module.

A fourth processing module (a target processing module) includes a node controller NC 4, a processor processor 4, a storage space memory 4 corresponding to the processor processor 4, and a directory dir 4, and the dir 4 is used for maintaining a status of the memory 4 that is possessed by another processing module.

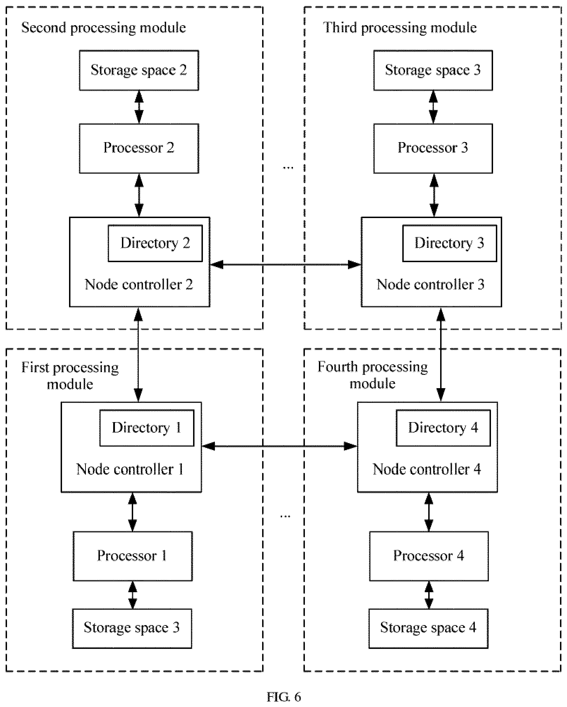

The four processing modules are interconnected by using the node controllers NC, to form a CC-NUMA system, as shown in FIG. 6.

The processor 2 needs to cache a line of data A (target data) in the memory 1, and wants to occupy the line of data exclusively. The processor 2 sends a read request to the NC 2, and the NC 2 routes the read request to the NC 1. The read request is used for requesting to cache the data A and occupying the data A exclusively. The NC 1 receives the read request, forwards the read request to the processor 1, and simultaneously views the directory dir 1. That the data A is in a shared state is recorded in the dir 1, and the data is cached in the memory 3 and the memory 4 (target storage spaces). The NC 1 separately sends a listening request to each of the NC 3 and the NC 4. Information included in the listening request is as follows: A requester requests to occupy the data A exclusively (an expected status), and the requester is the processor 2, and the listening response is returned to the requester after the listening is completed.

After receiving the read request sent by the NC 1, the processor 1 finds the data A in the memory 1 according to address information in the read request, and returns the data A to the NC 1. The NC 1 generates a target packet after receiving the data A, and returns the target packet to the NC 2. The target packet includes the data A and a listening quantity that is 2.

However, after receiving the listening request from the NC 1, the NC 3 and the NC 4 change a cache status of the data A in the memory 3 and a cache status of the data A in the memory 4 to invalid according to expected status distribution in the listening request, and generate a listening response. The listening response is used to indicate that the data A has been changed to invalid. The NC 3 and the NC 4 each return a listening response to the NC 2.

The NC 2 receives the target packet returned by the NC 1, determines the listening quantity, and simultaneously successively receives the listening responses returned by the NC 3 and the NC 4. In this case, if a quantity of received listening responses is 2 and matches the listening quantity in the target packet, the NC 2 determines that all the listening responses are collected, and returns the data A in the target packet to the processor 2, and simultaneously sends an update packet to the NC 1. The NC 1 receives the update packet, and changes a status of the data A in the dir 1 into exclusive according to the update packet, that is, only the memory 2 caches the data.

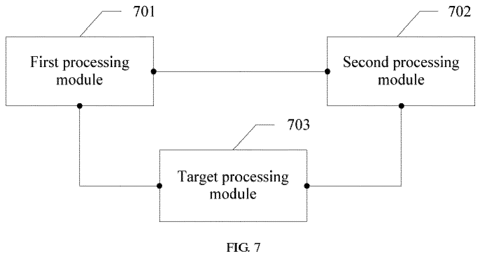

The memory access method in the embodiments of the present invention is described above, and a multiprocessor system in the embodiments of the present invention is described below. Referring to FIG. 7, an embodiment of the multiprocessor system according to the embodiments of the present invention includes:
a first processing module 701, configured to: receive a read request sent by a second processing module, where the read request is used for requesting to cache target data in a storage space corresponding to the first processing module and indicating a status expected by the second processing module for the target data; determine, according to a destination directory, one or more target storage spaces in which the target data is cached, where the target storage space is a storage space other than the storage space corresponding to the first processing module; send a listening request to one or more target processing modules corresponding to the target storage space; return a target packet to the second processing module, where the target packet includes the target data and a listening quantity, and the listening quantity is a quantity of listening requests sent by the first processing module; and when a listening response received by the second processing module matches the listening quantity, receive an update packet sent by the second processing module, and update the destination directory according to the update packet;
a second processing module 702, configured to: send the read request to the first processing module; receive the target packet returned by the first processing module; receive the listening response that is returned by the target processing module according to the listening request, where the listening response is used for responding to the expected status; and when the second processing module determines that a quantity of listening responses matches the listening quantity, send the update packet to the first processing module; and
the target processing module 703, configured to: receive the listening request sent by the first processing module, where the listening request is used to indicate the status expected by the second processing module for the target data; change a cache status of the target data in the target storage space according to the expected status, and generate the listening response; and return the listening response to the second processing module.

In this embodiment of the present invention, after receiving the read request sent by the second processing module for the target data, the first processing module 701 determines, according to the destination directory, the target storage space in which the target data is cached, sends the listening request to the target processing module 703 corresponding to the target storage space, and simultaneously returns the target packet to the second processing module 702. The target packet carries the target data and the quantity of listening requests sent by the first processing module. The second processing module 702 can determine, according to the quantity carried in the target packet and the listening response returned by the target processing module 703, that the request is completed, and sends the update packet to the first processing module 701. The first processing module 701 updates a status of the target data in the directory according to the update packet. It may be learned that, in this solution, the first processing module 701 may directly return the target data to the second processing module 702 without a need to wait for collection of all listening responses, and simultaneously instruct the target processing module 703 to directly return the listening response to the second processing module 702, and the listening response is collected on the first processing module 701 to confirm that a task is completed. In this way, a delay of the target data from the second processing module 702 to the first processing module 701 can be covered by a delay of collecting the listening response, so that serialization of two delays is avoided, a delay of an entire requesting process is shortened, and response efficiency is improved.

Based on the multiprocessor system corresponding to FIG. 7, in this embodiment of the present invention, the listening request includes a requester of the expected status and an instruction for returning the listening response to the requester, and the requester is the second processing module. Correspondingly, the target processing module is further configured to return the listening response to the second processing module according to the instruction.

Based on the multiprocessor system corresponding to FIG. 7, in this embodiment of the present invention, if the expected status is occupying the target data exclusively, that is, the second processing module expects that no processing module other than the second processing module can cache the target data, correspondingly, the target processing module 703 is further configured to change the cache status of the target data in the target storage space to invalid.

Based on the multiprocessor system corresponding to FIG. 7, in this embodiment of the present invention, if the expected status is sharing the target data, that is, the second processing module expects to share the target data with another processing module, that is, both the second processing module and the another processing module can cache the target data, correspondingly, the target processing module 703 is further configured to change the cache status of the target data in the target storage space to shared. Based on the multiprocessor system corresponding to FIG. 7, in this embodiment of the present invention, the first processing module, the second processing module, and the target processing module each include at least one processor. Optionally, the first processing module, the second processing module, and the target processing module each may further include at least one node controller.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a read-only memory (English full name: Read-Only Memory, ROM for short), a random access memory (English full name: Random Access Memory, RAM for short), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A memory access method, comprising:
receiving, by a first processing module, a read request sent by a second processing module, wherein the read request is used for requesting to cache target data in a storage space corresponding to the first processing module and indicating a status expected by the second processing module for the target data;
determining, by the first processing module according to a destination directory, one or more target storage spaces in which the target data is cached, wherein the target storage space is a storage space other than the storage space corresponding to the first processing module;
sending, by the first processing module, a listening request to one or more target processing modules corresponding to the target storage space, so that the one or more target processing modules return a listening response to the second processing module according to the listening request, wherein the listening response is used for responding to the expected status;
returning, by the first processing module, a target packet to the second processing module, wherein the target packet comprises the target data and a listening quantity, and the listening quantity is a quantity of listening requests sent by the first processing module;
when a quantity of listening responses received by the second processing module matches the listening quantity, receiving, by the first processing module, an update packet sent by the second processing module; and
updating, by the first processing module, the destination directory according to the update packet.

2. The method according to claim 1, wherein the listening request comprises a requester of the expected status and an instruction for returning the listening response to the requester, and the requester is the second processing module.

3. The method according to claim 1 or 2, wherein the expected status is occupying the target data exclusively, and the listening request is used for requesting to change a cache status of the target data in the target storage space to invalid.

4. The method according to claim 1 or 2, wherein the expected status is sharing the target data, and the listening request is used for requesting to change a cache status of the target data in the target storage space to shared.

5. A memory access method, comprising:
sending, by a second processing module, a read request to a first processing module, wherein the read request is used for requesting to cache target data in a storage space corresponding to the first processing module and indicating a status expected by the second processing module for the target data;
receiving, by the second processing module, a target packet returned by the first processing module, wherein the target packet comprises the target data and a listening quantity, the listening quantity is a quantity of listening requests sent by the first processing module to a target processing module, the target processing module is a processing module corresponding to one or more target storage spaces in which the target data is cached and that are determined by the first processing module according to a destination directory, and the target storage space is a storage space other than the storage space corresponding to the first processing module;
receiving, by the second processing module, a listening response that is returned by the target processing module according to the listening request, wherein the listening response is used for responding to the expected status; and
when the second processing module determines that a quantity of listening responses matches the listening quantity, sending, by the second processing module, an update packet to the first processing module, wherein the update packet is used by the first processing module to update the destination directory.

6. The method according to claim 5, wherein the expected status is occupying the target data exclusively, and the listening response is used to indicate that a cache status of the target data in the target storage space has been changed to invalid.

7. The method according to claim 5, wherein the expected status is sharing the target data, and the listening response is used to indicate that a cache status of the target data in the target storage space has been changed to shared.

8. A memory access method, comprising:
receiving, by a target processing module, a listening request sent by a first processing module, wherein the listening request is used to indicate a status expected by a second processing module for target data, and the target data is data in a storage space corresponding to the first processing module;
changing, by the target processing module, a cache status of the target data in a target storage space according to the expected status, and generating a listening response, wherein the target storage space is a storage space corresponding to the target processing module; and
returning, by the target processing module, the listening response to the second processing module.

9. The method according to claim 8, wherein the listening request comprises a requester of the expected status and an instruction for returning the listening response to the requester, and the requester is the second processing module; and
the returning, by the target processing module, the listening response to the second processing module comprises:
returning, by the target processing module, the listening response to the second processing module according to the instruction.

10. The method according to claim 8 or 9, wherein the expected status is occupying target data exclusively, and the changing, by the target processing module, a cache status of the target data in a target storage space according to the expected status comprises:
changing, by the target processing module, the cache status of the target data in the target storage space to invalid.

11. The method according to claim 8 or 9, wherein the expected status is sharing the target data, and the changing, by the target processing module, a cache status of the target data in a target storage space according to the expected status comprises:
changing, by the target processing module, the cache status of the target data in the target storage space to shared.

12. A multiprocessor system, comprising: a first processing module, a second processing module, and a target processing module; wherein
the first processing module is configured to: receive a read request sent by the second processing module, wherein the read request is used for requesting to cache target data in a storage space corresponding to the first processing module and indicating a status expected by the second processing module for the target data; determine, according to a destination directory, one or more target storage spaces in which the target data is cached, wherein the target storage space is a storage space other than the storage space corresponding to the first processing module; send a listening request to one or more target processing modules corresponding to the target storage space; return a target packet to the second processing module, wherein the target packet comprises the target data and a listening quantity, and the listening quantity is a quantity of listening requests sent by the first processing module; and when a quantity of the listening response received by the second processing module matches the listening quantity, receive an update packet sent by the second processing module, and update the destination directory according to the update packet;
the second processing module is configured to: send the read request to the first processing module; receive the target packet returned by the first processing module; receive the listening response that is returned by the target processing module according to the listening request, wherein the listening response is used for responding to the expected status; and when the second processing module determines that a quantity of listening responses matches the listening quantity, send the update packet to the first processing module; and
the target processing module is configured to: receive the listening request sent by the first processing module, wherein the listening request is used to indicate the status expected by the second processing module for the target data; change a cache status of the target data in the target storage space according to the expected status, and generate the listening response; and return the listening response to the second processing module.

13. The system according to claim 12, wherein the listening request comprises a requester of the expected status and an instruction for returning the listening response to the requester, and the requester is the second processing module; and
the target processing module is further configured to return the listening response to the second processing module according to the instruction.

14. The system according to claim 12 or 13, wherein the expected status is occupying the target data exclusively; and
the target processing module is further configured to change the cache status of the target data in the target storage space to invalid.

15. The system according to claim 12 or 13, wherein the expected status is sharing the target data, and the target processing module is further configured to request to change the cache status of the target data in the target storage space to shared.
